Europäisches Patentamt

European Patent Office

Office européen des brevets

(19)

(11) Veröffentlichungsnummer: **0 180 784**
**A2**

(12) # EUROPÄISCHE PATENTANMELDUNG

(21) Anmeldenummer: 85112643.3

(22) Anmeldetag: 05.10.85

(51) Int. Cl.⁴: **F 16 K 1/38**

(30) Priorität: 31.10.84 CH 5194/84

(43) Veröffentlichungstag der Anmeldung:
14.05.86 Patentblatt 86/20

(84) Benannte Vertragsstaaten:
BE DE FR GB IT NL SE

(71) Anmelder: Rosenmund AG
Gestadeckplatz 6
CH-4410 Liestal(CH)

(72) Erfinder: Weibel, Hans
Brunnhaldenweg 3
CH-4410 Liestal(CH)

(72) Erfinder: Steiner, Martin
Sichternstrasse 30
CH-4410 Liestal(CH)

(72) Erfinder: Grieder, Max
Im Wegacker 1
CH-4492 Technau(CH)

(74) Vertreter: Punschke und Frei Patentanwälte
Hedwigsteig 6 Postfach 95
CH-8029 Zürich(CH)

(54) Ventil an Verarbeitungsanlage.

(57) Bei einem Ventil an einer Verarbeitungsanlage auf dem Gebiet der chemischen Apparatetechnik, mit einem Ventilgehäuse (1), mit einer Zuflussöffnung (2) und mit einem Abwurfschacht (4) sowie mit einem im Bereich der Zuflussöffnung angeordneten Ventilsitz (20) und einem zugeordneten Ventilkegel (8), bestehen wenigstens die einander berührenden Teile von Ventilsitz (20) und Ventilkegel (8) aus Metall. Die Innenwand des als Rotationskörper ausgebildeten Ventilsitzes weist in Durchflussrichtung (X) zwei benachbarte Bereiche (A, B) unterschiedlichen Durchmessers auf, welche durch eine Kante (19) voneinander getrennt sind. Nur die Kante des Ventilsitzes (20) liegt bei geschlossenem Ventil am Mantel (16) des Ventilkegels (8) an. Vorzugsweise weist die Wand des Ventilsitzes (20) im ersten, der Zuflussöffnung (2) zugewandten Bereich (A) einen im wesentlichen konstanten Radius auf, der sich im anschliessenden zweiten Bereich (B) in Durchflussrichtung (X) laufend vergrössert. Dadurch ergibt sich ein besonders sicheres Schliessverhalten. Dies kann durch ein axial wirkendes Federelement zusätzlich unterstützt werden. Diese Ausbildung ist besonders zur Dosierung eines Materialflusses von einem an der Zuflussöffnung angeschlossenen Druckbehälter vorteilhaft, welcher einen höheren Innendruck aufweist als das Ventilgehäuse.

./...

Croydon Printing Company Ltd

$\rightarrow$ X

Fig. 1

# VENTIL AN
# VERARBEITUNGSANLAGE

Die Erfindung betrifft ein Ventil an einer Verarbeitungsanlage auf dem Gebiet der chemischen Apparatetechnik, gemäss dem Oberbegriff des Patentanspruchs 1, sowie eine Anwendung eines solchen Ventils.

Auf dem Gebiet der chemische Apparatetechnik, insbesondere bei Verarbeitungsanlagen für Produkte der chemischen oder pharmazeutischen Industrie, werden an diejenigen Anlagenteile, die mit dem Produkt direkt in Berührung kommen, verschiedentlich besonders hohe Anforderungen an deren Reinheit gestellt, z.B. im Hinblick auf die Sterilität des Produktes. Besonders schwer lässt sich diese Anforderung an komplizierten mechanischen Anlagenteilen, wie z.B. an Ventilen erfüllen. Ueber deren Verstellelemente oder Wellenabdichtungen können relativ leicht Verunreinigungen von aussen an die Innenwände der Anlage und damit an das Produkt gelangen. Eine weitere, häufig schwer zu erfüllende Anforderung an die kritischen Anlagenteile kann von der gewünschten Partikelfreiheit des Produktes ausgehen, die in einem sehr hohen Mass gewährleistet sein muss. Dies bedeutet, dass praktsch keine Partikel aus Teilen der Anlage in das Produkt gelangen dürfen, damit dessen hohe Reinheit und somit seine Wirksamkeit und gegebenenfalls seine Sterilität gewährleistet bleiben.

Zur Erfüllung der ersten Forderung müssen diejenigen Anlagenteile, die mit dem Produkt in Berührung kommen, nach Verarbeiten
einer bestimmten Anzahl von Chargen sterilisiert werden. Gemäss
dem Stand der Technik wird zur Sterilisation der Anlagenteile
einerseits der zugängliche Innenraum im allgemeinen manuell entsprechend behandelt; anderseits werden komplizierte, insbesondere
zerklüftete Teile aus der Anlage entfernt und separat gereinigt,
sterilisiert und dann wieder eingebaut. Dabei ist besonders auf
die am Ventil vorhandenen Dichtungen zu achten, die aus elastischem Material, beispielsweise aus einem Elastomer bestehen.
Diese Ventildichtungen unterliegen einer abrasiven Beanspruchung,
so dass sie einerseits die verlangte Partikelfreiheit des Produktes gefährden können und andererseits die Dichtwirkung unter
Umständen nicht mehr mit der gewünschten Sicherheit gewährleistet
ist. Ausserdem ist der Reinigungsvorgang zeit- und damit kostenaufwendig. Er muss daher mit besonderer Sorgfalt ausgeführt werden, damit die nachfolgenden Chargen den gestellten Anforderungen
genügen. Sollte dies einmal nicht gelingen, würden die nachfolgenden Chargen verderben, womit erhebliche volkswirtschaftliche
und finanzielle Verluste verbunden wären. Schliesslich gibt die
durch technische Gegebenheiten bedingte Gestaltung bekannter
Ventile in dem der Austragung des Produktes dienenden Bereich des
Ventilgehäuses immer wieder zu Beanstandungen Anlass, da das
Produkt nur ungenügend aus dem Ventilgehäuse entfernt werden kann
und damit weitere Schwierigkeiten beim Reinigungs- bzw. Sterilisationsvorgang entstehen.

Es ist Aufgabe der vorliegenden Erfindung, das Ventil an Verarbeitungsanlagen der angegebenen Art dahingehend zu verbessern,
dass die Zuverlässigkeit der Anlage erheblich erhöht wird, so
dass die zu erzielende Ausbeute auf der Anlage wesentlich gesteigert werden kann. Zu diesem Zweck wäre es vor allen Dingen wünschenswert, dass sich die beteiligten Anlagenteile leicht, sicher
und einfach sterilisieren lassen, wobei die Sterilisationsbedingungen über eine bestimmte Anzahl von zu verarbeitenden Chargen
erhalten bleiben sollen.

Diese Aufgabe wird erfindungsgemäss durch die in den Patentansprüchen 1 und 8 definierten Merkmale gelöst.

Ein wesentlicher Vorteil dieser Ausbildung liegt in der Möglichkeit, die Reinigung und Sterilisation des Ventils an der Anlage selbst, also ohne vorherigen Ausbau und folgenden Wiedereinbau vornehmen zu können. Die Sterilisation kann in wesentlich kürzerer Zeit und mit höherer Sicherheit durchgeführt werden. Es lässt sich damit eine grössere Zahl von Chargen zwischen den Reinigungs bzw. Sterilisationsschritten verarbeiten als dies bisher der Fall war. Ausserdem bleibt sichergestellt, dass sich im Verlauf des Sterilisationsvorgangs keine Kondensatsäcke bilden, die noch abzuleitendes Sterilisationsmedium enthalten. Ferner ist die Gefahr zur Bildung abrasiver Partikel an den Dichtungsflächen gebannt. Schliesslich weist das Ventil eine bessere Schliesswirkung, auch bei Verarbeiten von körnigen Produkten, auf.

Im folgenden wird die Erfindung anhand von bevorzugten Ausführungsbeispielen mit Hilfe der Zeichnungen näher erläutert.

Es zeigen:

Fig. 1     in teilweise geschnittener Darstellung ein besonders vorteilhaftes Ausführungsbeispiel eines Ventils,

Fig. 2     Einzelheiten des Ventils nach Fig. 1 und

Fig. 3     ein weiteres Ausführungsbeispiel eines Ventilsitzes gemäss der Erfindung.

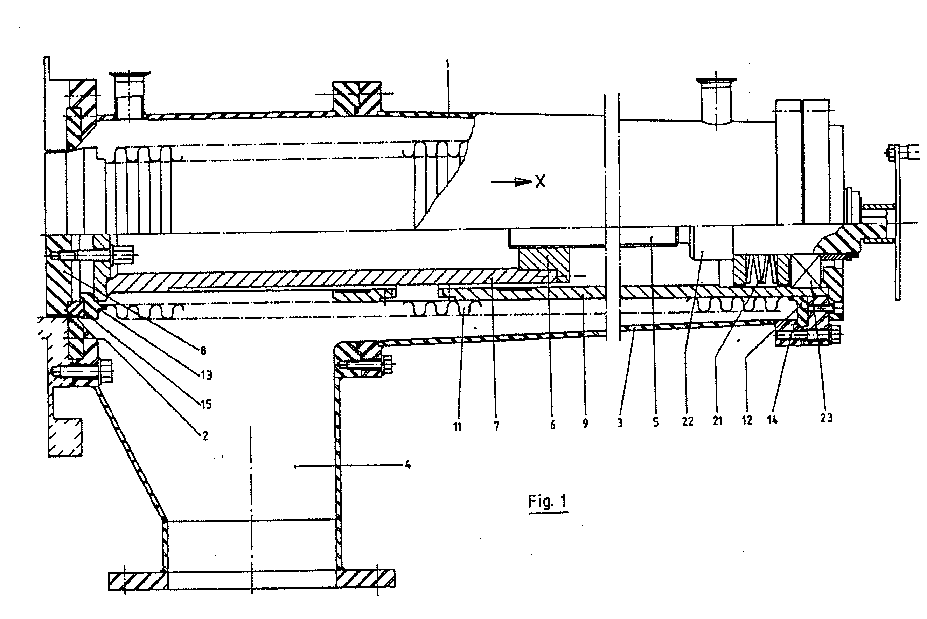

Gemäss der Darstellung in Fig. 1 ist ein Ventilgehäuse 1 mit einem Zulaufflansch 2 versehen, mit welchem das Ventil an dem Gehäuse einer Verarbeitungseinrichtung angesetzt ist. Dabei kann die Verarbeitungseinrichtung ein beliebiger Teil einer Anlage zur Herstellung oder Verarbeitung von fliess- oder schüttfähigen Produkten sein. Das Gehäuse ist im Beispiel mehrteilig ausgebildet und dient gleichzeitig als Träger bzw. Lager für Betätigungsvorrichtungen zum Verstellen des Ventils.

Der Boden 3 des Ventilgehäuses 1 ist in Richtung auf einen Abwurfschacht 4 geneigt, so dass das zu verarbeitende Produkt mit Sicherheit aus allen Bodenbereichen des Ventilgehäuses dem Abwurfschacht zugeleitet wird. Vorzugsweise ist der dem Zulaufflansch 2 am nächsten liegende Bereich des Ventilgehäuses als Abwurfschacht ausgebildet. Dadurch wird das durch das Ventil strömende Produkt möglichst ohne Umwege dem Abwurfschacht zugeleitet. Durch diese besonders günstige Gestaltung der Haupt-Strömungsrichtung ist die Gefahr weitgehend beseitigt, dass das Produkt an Teilen des Ventilgehäuses hängenbleibt und damit den freien Durchlauf durch das Ventil stört.

Das Ventilgehäuse 1 dient als Träger des Ventiltriebs, der im Beispiel aus einer Spindel 5 sowie einem Mitnehmer 6 besteht. Der Mitnehmer 6 steht mit einer Hülse 7 in Verbindung, an deren anderem Ende eine später im einzelnen beschriebene Ventilplatte 8 angesetzt ist. Die Hülse 7 ist in einer zweiten Hülse 9 gleitend geführt. Beide Hülsen sind relativ zueinander axial verschiebbar. Dabei ist die zweite Hülse 9 mit ihrem der ersten Hülse abgewandten Ende an Teilen des Gehäuses 1 befestigt. Die erste Hülse 7 und mit ihr der Mitnehmer 6 des Spindeltriebs sind mit Hilfe einer nicht näher dargestellten Gleitführung in der zweiten, stationären Hülse 9 axial geführt und gegen Verdrehung gesichert.

An der Verbindungsstelle der zweiten Hülse 9 mit dem Ventilgehäuse 1, in Fig.1 auf der äussersten rechten Seite, ist im Beispiel ein Handrad 10 angeordnet, welches mit der Spindel 5 verbunden ist und in Teilen des Gehäuses 1 gelagert ist. Anstelle des Handrades kann auch ein beliebiger anderer Antrieb, z.B. ein Elektro- oder Hydraulikmotor, vorgesehen sein.

Der verwendete Spindeltrieb eignet sich als selbsthemmender Trieb besonders gut für die vorliegende Anwendung, bei der das Ventil einerseits mit äusserster Sicherheit exakt positioniert werden muss und andererseits die im Beispiel auf der Zulaufseite angeschlossene Verarbeitungsanlage gegenüber dem Innenraum des Ventilgehäuses unter Ueberdruck steht, wodurch die Tendenz zur Selbstöffnung des Ventils besteht. Diese Tendenz wird wegen der Selbsthemmung des Spindeltriebs wirksam unterbunden.

Die gesamte Aussenseite der Hülsen 7 und 9 ist mit einem Faltenbalg 11, im Beispiel einem Metallbalg, überzogen, welcher koaxial zu den Hülsen verläuft und an seinen Enden dicht schliessend an Teilen des Ventilgehäuses 1 befestigt, im Beispiel verschweisst ist. Dadurch ist der gesamte Antriebsteil des Ventils mit seinen relativ stark zerklüfteten Oberflächen hermetisch vom Transportraum für das zu dosierende Gut abgetrennt. Für diese Teile gelten daher nicht mehr die gleichen strengen Anforderungen bezüglich Partikelfreiheit oder Sterilität, wie für denjenigen Teil des Ventilinnenraums, der mit dem zu verarbeitenden Produkt in Berührung kommt. Besonders vorteilhaft ist für den vorgesehenen Einsatz die Verwendung eines Faltenbalges aus besonders resistentem Material, beispielsweise aus dünnem rostfreien Stahlblech.

Das Ventilgehäuse 1 weist ferner mindestens eine Einlassöffnung 12 für ein Sterilisationsmedium auf. Im Beispiel ist zusätzlich eine zweite Einlassöffnung 13 vorgesehen. Als Sterilisationsmedium kann beispielsweise Heissdampf von vorzugsweise 120 Grad Celsius über ein bis zwei Stunden eingegeben werden. Ausser Heissdampf lassen sich auch beliebige andere fluide Sterilisationsmittel verwenden.

Der im Laufe dieses Sterilisationsprozesses kondensierte Dampf wird im gezeigten Ausführungsbeispiel auf besonders vorteilhafte Weise über entsprechend geneigte Teile des Gehäusebodens 3 direkt dem Abwurfschacht 4 zugeleitet und wird von da aus nach aussen abgeführt. Wegen der beschriebenen Ausbildung des Gehäusebodens 3 und der hermetischen Abkapselung aller zerklüfteten Teile können sich im gezeigten Ausführungsbeispiel keine sogenannten Kondensatsäcke bilden, also Räume, in denen sich Sterilisationskondensat ansammelt, welches nicht oder nur schlecht ablaufen kann.

Der Faltenbalg 11 ist an seinen Enden mit Flanschteilen 12, 13 verschweist und mit diesen unter Zwischenlage von Dichtungen 14 bzw 15 an dem Ventilgehäuse 1 lösbar befestigt, z.B. angeschraubt. Dadurch wird die oben erwähnte hermetische Abtrennung zwischen demjenigen Innenraum des Ventilgehäuses, der mit dem zu verarbeitenden Produkt in Berührung kommt, von demjenigen Teil des Innenraums erreicht, welcher den Ventiltrieb aufnimmt. Durch die beschriebene Massnahme lässt sich die Sterilisation des mit dem Produkt in Berührung kommenden Innenraums des Ventilgehäuses besonders einfach und sicher, sowohl bei offenem als auch bei geschlossenem System, durchführen.

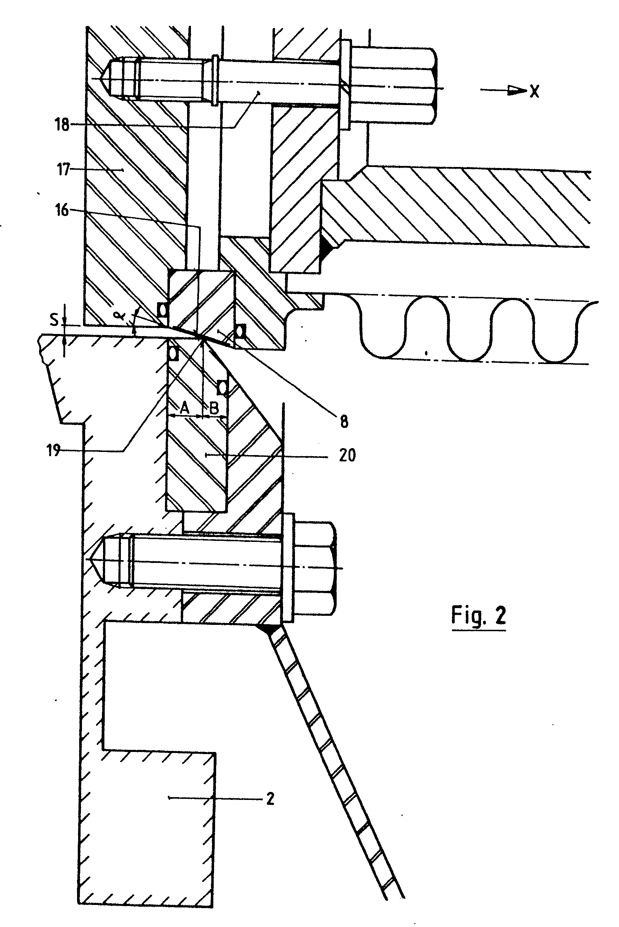

Im folgenden wird anhand von Fig. 2 auf bevorzugte Ausbildungen des Ventilsitzes sowie des Ventilkegels 8 eingegangen. Die Mantelfläche des Ventilkegels 8 enthält im Beispiel einen Hartmetall-Einsatz 16, welcher in den Ventilkegel eingelasen ist. Der gegen die Symmetrieachse gemäss Fig. 1 gemessene Kegelwinkel alpha beträgt vorzugsweise zwischen 10 und 30 Grad. Der Ventilkegel 8 ist zwischen einer Ventilplatte 17 und dem zweiten Flanschteil 13 eingeklemmt, und zwar mit Hilfe eines die erste Hülse 7 mit der Ventilplatte 17 verbindenden Befestigungselementes, z.B. mit Hilfe von Schrauben 18.

Der Einsatz 16 am Ventilkegel 8 dient im Beispiel als Gegenfläche für eine scharfe Kante 19 im Ventilsitz 20, so dass eine schneiden-ähnliche Funktion beim Schliessen des Ventils entsteht. Vorzugsweise besteht mindestens die Kante 19 des Ventilsitzes 20 aus einem weicheren Metall als es für den Einsatz 16 verwendet wird.

Die Form des rotationssymmetrischen Ventilsitzes 20 umfasst einen ersten, dem Zulaufflansch 2 zugewandten Teil A, welcher einen im wesentlichen konstanten Innenradius aufweist. An der Kante 19 geht der Teil A in einen zweiten Teil B über, dessen Innenradius sich ständig vergrössert. Im Beispiel nach Fig. 2 vergrössert sich der Radius sogar stetig. Im Bereich der Kante 19 schliessen die beiden Bereiche A und B einen stumpfen Winkel ein, der zwischen 120 und 175 Grad, vorzugsweise etwa 135 Grad beträgt. Durch diese Ausbildung des Ventilsitzes 20 wird erreicht, dass das in das Ventilgehäuse einströmende Produkt möglichst ohne Umwege in den darunter befindlichen Abwurfschacht 4 geleitet wird. Die Kante 19 sorgt beim Schliessen des Ventils dafür, dass auch bei granulatförmigen oder körnigen Produkten das vollständige und sichere Schliessen gewährleistet ist. Es besteht praktisch keine Gefahr mehr, dass sich Teile des Produktes zwischen Ventilsitz 20 und Ventilplatte 8 klemmen und dadurch die Dosierqualität bzw. die Sicherheit gegen unbeabsichtigtes Eindringen des Produktes in das Ventilgehäuse beeinträchtigen.

Die Ventilplatte 17 weist einen Aussenradius auf, der um einen Spalt S geringer ist als der Innenradius des Zulaufflansches 2. Dadurch wird der freie Zufluss des Produktes bis an die Kante 19 des Ventilsitzes 20 gewährleistet und das Einklemmen von Teilen des Produktes beim Schliesen des Ventils vermieden.

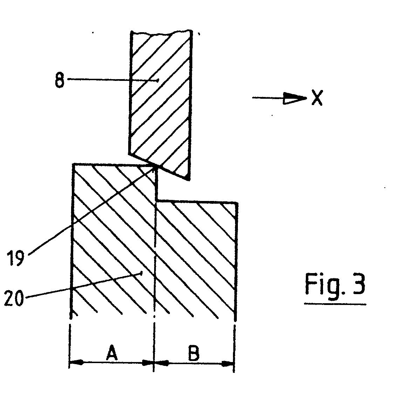

In Abwandlung des in Fig. 2 gezeigten Beispiels kann der Ventilsitz 20 auch eine andere Form aufweisen, welche eine an den Mantel bzw. die Platte 16 des Ventilkegels 8 anschliessende Kante 19 aufweist. Eine mögliche Ausführungsform ist in Fig. 3 schematisch dargestellt. Der Bereich A im Ventilsitz 20 weist einen im wesentlichen konstanten Innenradius auf. In Durchlaufrichtung X folgt die Kante 19, welche bei geschlossenem Ventil an dem Einsatz 16 des Ventilkegels 8 anliegt. Auf die Kante 19 folgt in Durchlaufrichtung X im Ventilsitz 20 der zweite Bereich B, der in diesem Fall ebenfalls einen im wesentlichen konstanten Innenradius aufweist. Dieser ist jedoch kleiner als der Innenradius im Bereich A.

Zur Unterstützung des sicheren Schliessens des Ventils ist die Ventilplatte 17 axial federnd gegenüber dem Ventilgehäuse bzw. gegenüber dem mit dem Ventilgehäuse verbundenen Ventilsitz 20 angebracht. Die Federwirkung wird im bevorzugten Ausführungsbeispiel mit einer in Fig. 1 dargestellten Schraubenfeder 21 erreicht. Die Schraubenfeder übt einen bestimmten Federdruck zwischen einer Schulter 22 der Spindel 5 und einem Block 23 aus, der am Lager der Spindel bzw. am Ventilgehäuse 1 abgestützt ist. Von der Ventilplatte 17 wird der auftretende Axialdruck über die erste Hülse 7 und den Mitnehmer 6 auf die Spindel 5 übertragen. Dadurch liegt bei geschlossenem Ventil an der Ventilplatte 17 und damit zwischen dem Mantel des Ventilkegels und der Kante 19 ein durch die Federkraft der Feder 21 definierter konstanter Schliessdruck, der für ein sicheres Schliessen des Ventils, auch bei Verarbeitung eines körnigen Produktes, sorgt. Bewsonders vorteilhaft ist die Federwirkung auch beim Schliessen des Ventils gegen einen vom zulaufenden Produkt bzw. von dessen Behälter ausgeübten Druck.

PATENTANSPRUECHE

1. Ventil an Verarbeitungsanlage auf dem Gebiet der chemischen Apparatetechnik, mit einem Ventilgehäuse, das mit einer Zuflussöffnung (2) und mit einem Abwurfschacht (4) sowie mit einem im Bereich der Zuflussöffnung angeordneten Ventilsitz (20) und einem zugeordneten Ventilkegel (8) versehen ist, dadurch gekennzeichnet, dass wenigstens die einander berührenden Teile von Ventilsitz (20) und Ventilkegel (8) aus Metall bestehen und dass die Innenwand des als Rotationskörper ausgebildeten Ventilsitzes in Durchflussrichtung (X) zwei benachbarte Bereiche (A, B) unterschiedlichen Durchmessers aufweist, welche durch eine Kante (19) voneinander getrennt sind, wobei nur die Kante bei geschlossenem Ventil am Mantel (16) des Ventilkegels (8) anliegt.

2. Ventil nach Anspruch 1, dadurch gekennzeichnet, dass die Wand des Ventilsitzes im ersten, der Zuflussöffnung (2) zugewandten Bereich (A) einen im wesentlichen konstanten Radius aufweist, der sich im anschliessenden zweiten Bereich (B) in Durchflussrichtung (X) laufend vergrössert.

3. Ventil nach Anspruch 1, dadurch gekennzeichnet, dass der Radius im zweiten Bereich des Ventilsitzes (20) in Durchflussrichtung stetig zunimmt.

4.    Ventil nach Anspruch 1, dadurch gekennzeichnet, dass die zu verschiedenen Bereichen (A, B) gehörenden Innenflächen des Ventilsitzes (20) an der Kante (19) einen Winkel zwischen 120 und 175 Grad einschliessen.


5.    Ventil nach Anspruch 1, dadurch gekennzeichnet, dass der Kegelwinkel (alpha) des Ventilkegels (8) zwischen 10 und 30 Grad beträgt.


6.    Ventil nach Anspruch 1, dadurch gekennzeichnet, dass die Kante (19) des Ventilsitzes (20) aus einem weicheren Material besteht als der bei geschlossenem Ventil an der Kante anliegende Mantelteil (16) des Ventilkegels (8).


7.    Ventil nach Anspruch 1, dadurch gekennzeichnet, dass dem Ventilkegel (8) eine Ventilplatte (17) vorgesetzt ist, deren Aussenmasse um einen Spalt (S) kleiner sind als es dem Innenmass der Zulauföffnung in das Ventilgehäuse (1) in diesem Bereich entspricht.


8.    Anwendung eines Ventils nach Anspruch 1 zur Dosierung eines Materialflusses von einem an der Zuflussöffnung angeschlossenen Druckbehälter, welcher einen höheren Innendruck aufweist als das Ventilgehäuse, daduch gekennzeichnet, dass der Ventilkegel (8) mit einem selbsthemmenden Ventiltrieb (5, 6) verbunden ist.


9.    Anwendung nach Anspruch 8, dadurch gekennzeichnet, dass der Ventiltrieb (5,6) gegen den Innenraum des Ventilgehäuses (1) durch einen Faltenbalg (11) hermetisch abgedichtet ist.

10. Anwendung nach Anspruch 8, dadurch gekennzeichnet, dass als Ventiltrieb ein Spindeltrieb (5,6) vorgesehen ist.

11. Andung nach Anspruch 8, dadurch gekennzeichnet, dass der Ventiltrieb (5, 6) im Ventilgehäuse (1) gelagert ist und dass zwischen dem Lager bzw. dem Ventilgehäuse (1) und dem Ventiltrieb ein axial wirkendes Federelement (21) vorgesehen ist.

12. Anwendung nach den Ansprüchen 10 und 11, dadurch gekennzeichnet, dass eine Schraubenfeder (21) zwischen einer Schulter (22) an der Spindel (5) des Spindeltriebs und dem Lager der Spindel bzw. dem Ventilgehäuse (1) angeordnet ist.

Fig. 1

Fig. 2

8

19

20

A    B

→ X

Fig. 3